(19) **Europäisches Patentamt / European Patent Office / Office européen des brevets**

(11) **EP 3 493 101 B1**

(12) **EUROPEAN PATENT SPECIFICATION**

(45) Date of publication and mention
of the grant of the patent:
**06.10.2021 Bulletin 2021/40**

(21) Application number: **17833497.5**

(22) Date of filing: **24.07.2017**

(51) Int Cl.:
***G06K 7/14*** *(2006.01)*

(86) International application number:
**PCT/CN2017/094013**

(87) International publication number:
**WO 2018/019194 (01.02.2018 Gazette 2018/05)**

(54) **IMAGE RECOGNITION METHOD, TERMINAL, AND NONVOLATILE STORAGE MEDIUM**

BILDERKENNUNGSVERFAHREN, ENDGERÄT UND NICHTFLÜCHTIGES SPEICHERMEDIUM

PROCÉDÉ DE RECONNAISSANCE D'IMAGES, TERMINAL ET SUPPORT DE STOCKAGE NON VOLATILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2016 CN 201610604477**

(43) Date of publication of application:
**05.06.2019 Bulletin 2019/23**

(73) Proprietor: **Tencent Technology (Shenzhen)
Company Limited
Shenzen, Guangdong 518057 (CN)**

(72) Inventors:
• **JIANG, Mei
Nanshan District Shenzhen,Guangdong 518057
(CN)**

• **LIU, Hailong
Nanshan District Shenzhen,Guangdong 518057
(CN)**
• **XIONG, Pengfei
Nanshan District Shenzhen,Guangdong 518057
(CN)**

(74) Representative: **Eisenführ Speiser
Patentanwälte Rechtsanwälte PartGmbB
Postfach 31 02 60
80102 München (DE)**

(56) References cited:
**EP-A2- 0 492 956      CN-A- 101 154 267
CN-A- 102 682 267      CN-A- 105 631 383
US-A1- 2001 025 886    US-A1- 2012 070 086
US-A1- 2013 193 211**

**Description**

**FIELD OF THE TECHNOLOGY**

The present disclosure relates to the field of image identification, and in particular, to a method for image identification, a terminal and a non-volatile storage medium.

**BACKGROUND OF THE DISCLOSURE**

A conventional code scanning engine needs to scan a code on each frame of image in an input image stream. When the input image stream includes a large number of images of no code, a resource of a code scanning engine is cost, thereby lowering a velocity of identifying an image of a code (for example, a one-dimensional code and a two-dimensional code).

Currently, a one-dimensional code image is roughly identified by using simple image gradient information. A specific process thereof includes: first obtaining an original image, the original image being assumed to be a one-dimensional code image, calculating a difference between grayscale values of the original image in an x direction and in a y direction because the one-dimensional code image is basically a vertical striped pattern, and an absolute difference between the grayscale values of the one-dimensional code image in the x direction and in the y direction is relatively great, then performing binarization on the difference between the grayscale values with a fixed threshold, thereby filtering out a smooth area, and then performing a mean filtering operation and a morphological operation to identify a one-dimensional code area of the original image.

However, only a vertical one-dimensional code can be identified based on the image gradient information. A one-dimensional code that is of slight rotation cannot be identified, other codes besides the one-dimensional code also cannot be identified. Therefore, limitations of image identification exist. In addition, a morphological operation and a connected component analysis are both used for each pixel. The amount of the calculation is great, and an object of quickly identifying an image cannot be implemented.

US 2013/0193211 A1 discloses a fast image-based barcode detection and recognition technique allows a user of a device to analyze an image containing a barcode, locating the barcode containing region of the image automatically, without requiring a user to frame and align the image. In one embodiment, the technique may locate multiple omni-directional barcode regions simultaneously.

US 2012/0070086 A1 discloses an information reading apparatus that reads information from an image. The apparatus includes: an acquiring module, a first processing module, a second processing module, and an adding module. The acquiring module acquires a whole image containing plural reading subjects. The first processing module performs processing of extracting particular patterns from the respective reading subjects by performing a pattern analysis on the whole image to identify the reading subjects contained in the whole image. The second processing module performs processing of reading pieces of information from the respective reading subjects and recognizing the read-out pieces of information by analyzing the respective particular patterns extracted by the first processing module. The adding module adds current processing statuses for the respective reading subjects contained in the whole image based on at least one of sets of processing results of the first processing module and the second processing module.

US 2001/0025886 A1 discloses optical image readers having a two-dimensional image sensor and an auto-discrimination function. The auto-discrimination function identifies optical codes by type for pixel clusters and, in some cases, tilt angle and start/stop coordinates. The clustered pixel data is passed to an appropriate decoder identified by the auto-discrimination function based upon a likelihood that the cluster contains an optical code of a particular type. Line drawing techniques provide for adequate sampling of the clustered pixel data code based on the tilt angle of the code relative to a image sensor array.

**SUMMARY**

Embodiments of the present disclosure provide a method for image identification and a terminal, to resolve a problem of limitations of existing image identification. By using the method and the terminal, a one-dimensional code in any shape and other code images besides the one-dimensional code can both be identified, thereby effectively improving universality and reliability of identifying an image. A morphological operation and a connected component analysis on an image are not needed, thereby effectively improving a velocity of identifying an image.

According to a first aspect of the present disclosure, a method for image identification is provided. The method includes:

(i) obtaining a first image feature of a target image, wherein the first image feature is a grayscale value;

(ii) determining a target area of the target image based on the first image feature, comprising:

determining a first absolute value corresponding to each pixel in the target image, wherein the first absolute value is an absolute value of a difference between a gradient value of a grayscale value of the pixel in a horizontal direction and a gradient value of a grayscale value of the pixel in a vertical direction;

comparing the first absolute value corresponding to each pixel with a first preset threshold; and

determining an area comprising all pixels whose first absolute values are greater than the first preset threshold, as the target area;

(iii) dividing the target area into multiple sub-areas, and filtering the sub-areas to determine a target sub-area of the target image, comprising:

determining a first pixel in an image in each sub-area, and adjacent pixels adjacent to the first pixel;

determining a first grayscale value comparison relationship between a grayscale value of the first pixel and a grayscale value of each of the adjacent pixels;

determining a local binary patterns LBP code of each adjacent pixel of the first pixel based on the first grayscale value comparison relationship;

determining the number of binary switching in the local binary patterns LBP codes of the adjacent pixels of the first pixel, wherein the number of binary switching in the LBP codes is the number of times of changing from 1 to 0 or changing from 0 to 1;

obtaining a sum of numbers of binary switching in the LBP codes for all pixels in the image in each sub-area; and

determining a sub-area whose sum of the numbers of binary switching in the LBP codes is greater than a third preset threshold, as the target sub-area;

(iv) obtaining a second image feature of an image in the target sub-area; and

(v) identifying a code type of the image in the target sub-area based on the second image feature, where the code type includes at least one of a one-dimensional code, a two-dimensional code and a non-code type,

wherein the second image feature is a Fern feature;

the obtaining a second image feature of an image in the target sub-area comprises:

obtaining a second grayscale value comparison relationship between grayscale values of any two pixels in the image in the target sub-area; and

determining a Fern feature of the image in the target sub-area based on the second grayscale value comparison relationship, wherein the Fern feature is represented by a binary bit; and

the identifying a code type of the image in the target sub-area based on the second image feature comprises:

converting the Fern feature into a decimal number;

inputting the decimal number into a target function; and

identifying the code type of the image in the target sub-area based on an output result of the target function;

or

wherein the second image feature is a Tree feature;

the obtaining a second image feature of an image in the target sub-area comprises:

obtaining a third grayscale value comparison relationship between grayscale values of two pixels corresponding to each tree node in the image in the target sub-area; and

determining a Tree feature of the image in the target sub-area based on the third grayscale value comparison relationship, wherein the Tree feature is represented by a binary bit; and

the identifying a code type of the image in the target sub-area based on the second image feature comprises:

converting the Tree feature into a decimal number;

inputting the decimal number into a target function; and

identifying the code type of the image in the target sub-area based on an output result of the target function.

According to a second aspect of the present disclosure, a terminal is provided. The terminal includes:

(i) a first obtaining module, configured to obtain a first image feature of a target image, wherein the first image feature is a grayscale value;

(ii) a first determining module, configured to determine a target area of the target image based on the first image feature, wherein the first determining module is further configured to:

determine a first absolute value corresponding to each pixel in the target image, wherein the first absolute value is an absolute value of a difference between a gradient value of a grayscale value of the pixel in a horizontal direction and a gradient value of a grayscale value of the pixel in a vertical direction;

compare the first absolute value corresponding to each pixel with a first preset threshold; and

determine an area comprising all pixels whose first absolute values are greater than the first preset threshold, as the target area;

(iii) a second determining module, configured to divide the target area into multiple sub-areas, and filter the sub-areas to determine a target sub-area of the target image, wherein the second determining module is further configured to:

determine a first pixel in an image in each sub-area, and adjacent pixels adjacent to the first pixel;

determine a comparison relationship between a grayscale value of the first pixel and a grayscale value of each of the adjacent pixels;

determine a local binary patterns LBP code of each adjacent pixel of the first pixel based on the first grayscale value comparison relationship;

determine the number of binary switching in the local binary patterns LBP codes of the adjacent pixels of the first pixel, wherein the number of binary switching in the LBP codes is the number of times of changing from 1 to 0 or changing from 0 to 1;

obtain a sum of numbers of binary switching in the LBP codes for all pixels in the image in each sub-area; and

determine a sub-area whose sum of the numbers of binary switching in the LBP codes is greater than a third preset threshold, as the target sub-area;

(iv) a second obtaining module, configured to obtain a second image feature of an image in the target sub-area; and

(v) an identification module, configured to identify a code type of the image in the target sub-area based on the second image feature, where the code type includes at least one of a one-dimensional code, a two-dimensional code and a non-code type,

wherein the second image feature is a Fern feature;

the second obtaining module is further configured to: obtain a second grayscale value comparison relationship between grayscale values of any two pixels in the image in the target sub-area; and determine a Fern feature of the image in the target sub-area based on the second grayscale value comparison relationship, wherein the Fern feature is represented by a binary bit; and

the identification module is further configured to: convert the Fern feature into a decimal number; input the decimal number into a target function; and identify the code type of the image in the target sub-area based on an output result of the target function,

or

wherein the second image feature is a Tree feature;

the second obtaining module is further configured to: obtain a third grayscale value comparison relationship between grayscale values of two pixels corresponding to each tree node in the image in the target sub-area; and determine a Tree feature of the image in the target sub-area based on the third grayscale value comparison relationship, wherein the Tree feature is represented by a binary bit; and

the identification module is further configured to: convert the Tree feature into a decimal number; input the decimal number into a target function; and identify the code type of the image in the target sub-area based on an output result of the target function.

According to a third aspect of the present disclosure, a non-volatile storage medium is provided. The non-volatile storage medium stores program instructions. The program instructions, when being executed by a processor, causes the processor to perform the foregoing method for image identification.

It can be seen from the foregoing technical solutions that the embodiments of the present disclosure have the following advantages.

After a first image feature of a target image is obtained, a target area of the target image is determined based on the first image feature. For example, an approximate code area is determined based on the first image feature. The target area is divided into multiple sub-areas, and a target sub-area of the target image is determined by filtering images in the sub-areas, a code type of the image in the target sub-area is determined based on an obtained second image feature of an image in the target sub-area. For example, an accurate code area is determined in the approximate code area, and then the code type of the image is determined on the accurate code area, for example, a one-dimensional code, a two-dimensional code or a non-code type. It can be learned that the code type is not limited to a one-dimensional code, and may alternatively be other code images besides the one-dimensional code, thereby effectively improving universality and reliability of identifying an image. A morphological operation and a connected component analysis on an image are not needed, thereby effectively improving a velocity of identifying an image.

## BRIEF DESCRIPTION OF THE DRAWINGS

FIG. 1 is a schematic structural diagram of a terminal according to an embodiment of the present disclosure;

FIG. 2 is a schematic diagram of a method for image identification according to an embodiment of the present disclosure;

FIG. 3 is a schematic flowchart of determining a target area according to an embodiment of the present disclosure;

FIG. 4 is another schematic flowchart of determining a target area according to an embodiment of the present disclosure;

FIG. 5 is a schematic flowchart of determining a target sub-area according to an embodiment of the present disclosure;

FIG. 6a is a schematic flowchart of calculating the number of binary switching in the LBP according to an embodiment of the present disclosure;

FIG. 6b is a schematic flowchart showing that a cascade classifier runs according to an embodiment of the present disclosure;

FIG. 6c is a schematic flowchart of a Tree feature according to an embodiment of the present disclosure;

FIG. 6d is a schematic flowchart of a gradient value according to an embodiment of the present disclosure;

FIG. 6e is a schematic diagram of an application scenario of identifying a code type of an image according to an embodiment of the present disclosure;

FIG. 6f is a schematic flowchart showing that another cascade classifier runs according to an embodiment of the present disclosure;

FIG. 7 is another schematic flowchart of determining a target sub-area according to an embodiment of the present disclosure;

FIG. 8 is a schematic flowchart of identifying a code type of an image according to an embodiment of the present disclosure;

FIG. 9 is another schematic flowchart of identifying a code type of an image according to an embodiment of the present disclosure; and

FIG. 10 is another schematic structural diagram of a terminal according to an embodiment of the present disclosure.

## DESCRIPTION OF EMBODIMENTS

Embodiments of the present disclosure provide a method for image identification and a terminal, to resolve a problem of limitations of existing image identification. By using the method and the terminal, a one-dimensional code in any shape and other code images besides the one-dimensional code can both be identified, thereby effectively improving universality and reliability of identifying an image. A morphological operation and a connected component analysis on an image are not needed, thereby effectively improving a velocity of identifying an image.

The following clearly and completely describes the technical solutions in the embodiments of the present disclosure with reference to the accompanying drawings in the embodiments of the present disclosure. Apparent, the described embodiments are only some embodiments instead of all embodiments of the present disclosure. All other embodiments obtained by a person skilled in the art based on the embodiments of the present disclosure without any creative work fall within the protection scope of the present disclosure.

In the specification, claims, and accompanying drawings of the present disclosure, the terms "first", "second", "third", "fourth", and so on (if existing) are intended to distinguish between similar objects rather than describe a specific order or a precedence order. It should be understood that the data termed in such a way are interchangeable in proper circumstances so that the embodiments described herein can be implemented in other orders than the order illustrated or described herein. In addition, terms, "including" and "having", and any variation thereof, are intended to cover non-exclusive inclusion. For example, a process, method, system, and product or device including a series of steps or a unit is not necessarily limited to listed steps or units, and can include another step or unit that is not clearly listed or is inherent to the process, method, product, or device.

Before the embodiments of the present disclosure are described, terms related to the embodiments of the present disclosure are first described.

A term "grayscale value" is defined as a color depth in a grey image. The grayscale value usually ranges from 0 to 255, where a grayscale value of white is 255, and a grayscale value of black is 0.

A term "local binary patterns" (English full name: local binary patterns, LBP for short) is an operator used for describing a partial texture feature of an image, and has prominent advantages such as rotation invariance and grayscale invariance. The LBP operator may obtain an LBP code for each pixel. After an original LBP operator is extracted for an image recording a grayscale value of each pixel, an obtained original LBP feature is still an image, and the obtained image records an LBP code value of each pixel.

A term "cluster analysis" is also referred to as a group analysis, and is defined as a multivariate statistical analysis method for classifying, according to the principle of "like attracts like", samples or indexes. An object discussed by the cluster analysis is a large number of samples required to be reasonably classified according to a respective feature. No mode is provided for reference or compliance. That is, the classification is performed without prior knowledge. The cluster analysis is a process during which data is classified into different categories or clusters. Therefore, objects in a same cluster have a great similarity, and objects in different clusters have a great difference. An object of the cluster analysis is to collect data based on a similarity to classify the data. Cluster derives from a lot of fields, including mathematics, computer science, statistics, biology and economics. In different application fields, a lot of cluster technologies are developed. The technology methods are used for describing data, balancing a similarity between different data sources, and classifying the data sources into different clusters.

In a term "connected component analysis", a connected component is usually defined as an image area including foreground pixels that have a same pixel value and that are adjacent to each other in an image. The connected component analysis means finding out each connected component in an image and marking, and is a relatively common and basic method in the field of image analysis and processing, for example, motion foreground target segmentation and extraction in visual tracking or medical image processing. The motion foreground target segmentation and extraction in the visual tracking may include pedestrian intrusion detection, legacy object detection, vehicle detection and tracking based on vision, and so on. The medical image processing may include interested target area extraction. That is, a connected component analysis method can be used in an application scenario where a foreground target needs to be extracted so as to subsequently process the foreground target. An object processed by the connected component analysis is usually a binary image.

The following describes application scenarios possibly related to the present disclosure by using examples.

In real life, when a user purchases a product in a mall, it possibly relates to that a salesperson scans a barcode of the product by using a code scanner, thereby determining price information of the product. If the user wants to know a price of a product, the user may directly scan a barcode of the product by using scanning software on a terminal, thereby obtaining price information of the product. Currently, some social applications are widely popular. For example, a user A may add a user B as a Wechat friend by scanning a Wechat two-dimensional code of the user B. Therefore, scanning of a one-dimensional code, a two-dimensional code or other codes in the future brings great convenience to a user's life. However, during scanning a code, it relates to identifying image information. An image needs to be determined whether to be an image of a one-dimensional code, a two-dimensional code or no code, then the image is decoded by using a corresponding decoder. Using a Wechat product as an example, after a user turns on a function of "scanning", a real-time image stream obtained from a camera of a mobile phone is sent to a QBar code scanning engine to be decoded after being focus-positioned. The QBar code scanning engine is a two-dimensional code and barcode identification engine that is obtained by developing after long-term optimization and improvement of a two-dimensional code and barcode identification technology by a Wechat mode identification center.

An existing code scanning engine technology needs to perform a one-dimensional code decoding and a two-dimensional code decoding on each frame of input image, thereby affecting a velocity of identifying a code. In the present disclosure, when a terminal activate a code scanning function, the terminal automatically calls a code scanning predetermining module to identify a one-dimensional code/a two-dimensional code. The code scanning predetermining module determines a target area of an image by extracting a first image feature of the image, divides the target area into multiple sub-areas, and further filters the multiple sub-areas to determine a target sub-area of the image. Then the code scanning predetermining module extracts a second image feature of the target sub-area, and determines a code type of an image in the target sub-area based on the second image feature, for example, a one-dimensional code, a two-dimensional code or a non-code type. It can be learned that the code type is not limited to a one-dimensional code, and may alternatively be other code images besides the one-dimensional code, thereby effectively improving universality and reliability of identifying an image. A morphological operation and a connected component analysis on an image are not needed, thereby effectively improving a velocity of identifying an image.

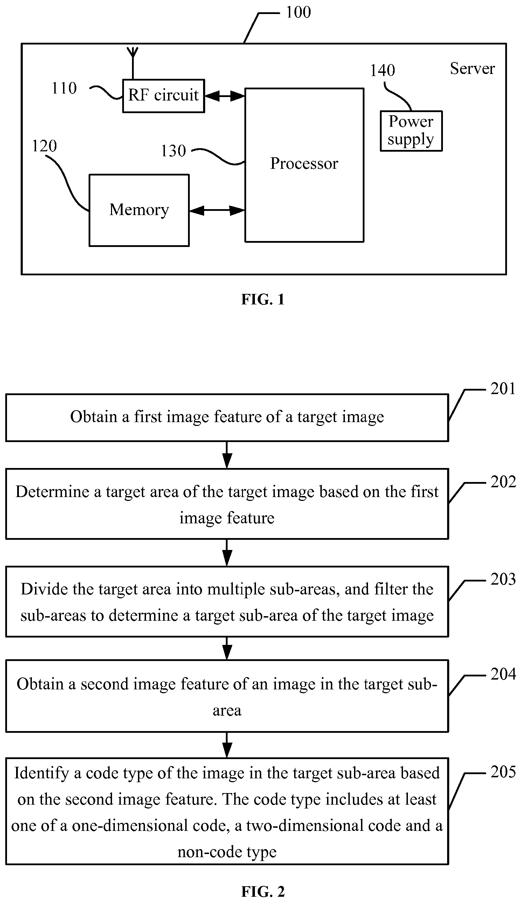

The following describes a terminal related to the present disclosure. As shown in FIG. 1, a specific structure of the terminal is described. The terminal 100 includes components such as a radio frequency (English full name: Radio Frequency, RE for short) circuit 110, a memory 120, a processor 130 and a power supply 140. A person skilled in the art may understand that the structure of the terminal 100 shown in FIG. 1 does not constitute a limitation to the terminal, and the terminal may include more components or fewer components than those shown in the drawing, or some components may be combined, or a different component deployment may be used.

The RF circuit 110 may be configured to send and receive information, for example, receiving and sending of a signal. Generally, the RF circuit 110 includes, but is not limited to, an antenna, at least one amplifier, a transceiver, a coupler, a low noise amplifier (English full name: Low Noise Amplifier, LNA for short), a duplexer, and so on. In addition, the RF circuit 110 may also communicate with a network and another device such as a terminal by wireless communication. The wireless communication may use any communications standard or protocol, which includes, but is not limited to, Global System of Mobile communication (English full name: Global System of Mobile communication, GSM for short), General Packet Radio Service (English full name: General Packet Radio Service, GPRS for short), Code Division Multiple Access (English full name: Code Division Multiple Access, CDMA for short), Wideband Code Division Multiple Access (English full name: Wideband Code Division Multiple Access, WCDMA for short), Long Term Evolution (English full name: Long Term Evolution, LTE for short), e-mail, Short Messaging Service (English full name: Short Messaging Service, SMS for short), and the like.

The memory 120 may be configured to store a software program and a module. The processor 130 runs the software program and the module stored in the memory 120, to implement various functional applications and data processing of the terminal 100. The memory 120 may mainly include a program storage area and a data storage area. The program storage area may store an operating system, an application program required by at least one function (such as a sound playback function and an image display function), and the like. The data storage area may store data (such as audio data and an address book) created according to use of the terminal 100, and the like. In addition, the memory 120 may include a high speed random access memory, and may further include a non-volatile memory, such as at least one magnetic disk storage device, a flash memory, or other volatile solid-state storage devices.

The processor 130 is a control center of the terminal 100, and is connected to various parts of the terminal 100 by using various interfaces and lines. By running or executing the software program and/or the module stored in the memory 120, and invoking data stored in the memory 120, the processor 130 performs various functions and data processing of the terminal 100, thereby performing overall monitoring on the terminal 100. Optionally, the processor 130 may include one or more processing units. In an embodiment of the present disclosure, the processor 130 may integrate an application processor and a modem processor. The application processor mainly processes an operating system, a user interface, an application program, and the like. The modem processor mainly processes wireless communication. It may be understood that the foregoing modem processor may alternatively not be integrated into the processor 130.

The terminal 100 further includes the power supply 140 (such as a battery) for supplying power to the components. In an embodiment of the present disclosure, the power supply may be logically connected to the processor 130 by using a power management system, thereby implementing functions such as charging, discharging and power consumption management by using the power management system.

Although not shown, the terminal 100 may further include an input unit, a display unit, and so on. Details are not described herein again.

In the embodiment of the present disclosure, the processor 130 is configured to:

obtain a first image feature of a target image;

determine a target area of the target image based on the first image feature;

divide the target area into multiple sub-areas, and filter the sub-areas to determine a target sub-area of the target image;

obtain a second image feature of an image in the target sub-area; and

identify a code type of the image in the target sub-area based on the second image feature, where the code type includes at least one of a one-dimensional code, a two-dimensional code and a non-code type.

In some possible implementations, the first image feature may be a grayscale value. In this case, the processor 130 is further configured to: determine a first absolute value corresponding to each pixel in the target image, where the first absolute value is an absolute value of a difference between a gradient value of a grayscale value of the pixel in a horizontal direction and a gradient value of a grayscale value of the pixel in a vertical direction; compare the first absolute value corresponding to each pixel with a first preset threshold; and determine an area including all pixels whose first absolute values are greater than the first preset threshold, as the target area.

In some possible implementations, the processor 130 is further configured to: determine a second absolute value corresponding to any two pixels in the target image, where the second absolute value is an absolute value of a difference between grayscale values of the any two pixels; compare the second absolute value with a second preset threshold; and determine an area including all pixels whose second absolute values are less than the second preset threshold, as the target area.

In some possible implementations, the processor 130 is further configured to: determine a first pixel in an image in each sub-area, and adjacent pixels adjacent to the first pixel; determine a first grayscale value comparison relationship between a grayscale value of the first pixel and a grayscale value of each of the adjacent pixels; determine a local binary patterns LBP code of each adjacent pixel based on the first grayscale value comparison relationship; determine the number of binary switching in the local binary patterns LBP codes of the adjacent pixels of the first pixel, where the number of binary switching in the LBP codes is the number of times of changing from 1 to 0 or changing from 0 to 1; obtain a sum of numbers of binary switching in the LBP codes for all pixels in the image in each sub-area; and determine a sub-area whose sum of the numbers of binary switching in the LBP codes is greater than a third preset threshold, as the target sub-area.

In some possible implementations, the processor 130 is further configured to: determine a first absolute sum value of each pixel in an image in each sub-area, where the first absolute sum value is a sum of an absolute value of a grayscale value of the pixel in a horizontal direction and an absolute value of a grayscale value of the pixel in a vertical direction; obtain a sum of first absolute sum values of all pixels in the image in each sub-area; and determine a sub-area whose sum of the first absolute sum values is greater than a fourth preset threshold, as the target sub-area.

In some possible implementations, the processor 130 is configured to: obtain a second grayscale value comparison relationship between grayscale values of any two pixels in the image in the target sub-area; determine a Fern feature of the image in the target sub-area based on the second grayscale value comparison relationship, where the Fern feature is represented by a binary bit; convert the Fern feature into a decimal number; input the decimal number into a target function; and identify the code type of the image in the target sub-area based on an output result of the target function.

In some possible implementations, the processor 130 is configured to: obtain a third grayscale value comparison relationship between grayscale values of two pixels corresponding to each tree node in the image in the target sub-area; determine a Tree feature of the image in the target sub-area based on the third grayscale value comparison relationship, where the Tree feature is represented by a binary bit; and convert the Tree feature into a decimal number; input the decimal number into a target function; and identify the code type of the image in the target sub-area based on an output result of the target function.

Referring to FIG. 2, FIG. 2 is a schematic diagram of a method for image identification according to an embodiment of the present disclosure. The method includes steps 201 to 205.

In step S201, a first image feature of a target image is obtained.

In the embodiment of the present disclosure, an obtained target image may be a color image or a black-and-white image. The target image is an image to be identified. The first image feature is image information that representing the target image, for example, a grayscale value, a luminance value, and a color coordinate. This is not specifically limited herein. In the embodiment of the present disclosure, the first image feature is a grayscale value.

In step S202, a target area of the target image is determined based on the first image feature.

In the embodiment of the present disclosure, a target area of the target image is determined based on the first image feature. The target area is an approximate area corresponding to a code area. For example, a rough code area of the target image is determined based on the first image feature.

In practice, there are a lot of methods for determining the target area of the target image based on the first image feature, for example, a cluster analysis, a connected component analysis, and a gradient difference-binary analysis. This is not specifically limited herein.

In step S203, the target area is divided into multiple sub-areas, and the sub-areas are filtered to determine a target sub-area of the target image.

In the embodiment of the present disclosure, the target area is divided into multiple sub-areas according to a preset rule. For example, the target area is divided into sliding windows for detection of LBP weak classifiers.

In the embodiment of the present disclosure, the sub-areas are filtered to determine the target sub-area of the target image. It can be learned that the target sub-area is a relatively accurate code area. In practice, an LBP weak classifier may be used to count binary switching in the LBP. Images corresponding to the target area are filtered by using a filtering method of a Sobel gradient statistics, to determine the target sub-area of the target image. This is not specifically limited herein.

In step S204, a second image feature of an image in the target sub-area is obtained.

In the embodiment of the present disclosure, in a case that the target sub-area of the target image is determined, a second image feature of an image in the target sub-area is obtained. The second image feature is a feature obtained by processing an original feature of the target image, so that a code type of the target image is subsequently determined based on the second image feature. In practice, the second image feature may be a simple and quick image feature such as a Fern feature, a Haar feature, or a Tree feature. This is not specifically limited herein. A calculation method of the Haar feature is similar to that of the Fern feature. The method is calculating a difference between sums of grayscale values of all pixels in two adjacent areas in the image. A calculation method of the Tree feature is similar to that of the Fern feature. The method is comparing grayscale values of a pair of pixels at any position. The calculation method of the Tree feature differs from the calculation method of the Fern feature in that a structure for calculating the Tree feature is tree-shaped.

In step S205, a code type of the image in the target sub-area is identified based on the second image feature. The code type includes at least one of a one-dimensional code, a two-dimensional code and a non-code type.

In the embodiment of the present disclosure, the code type of the image in the target sub-area is identified based on the second image feature, for example, a one-dimensional code, a two-dimensional code or a non-code type. It can be learned that the code type is not limited to a one-dimensional code, and may alternatively be other code images besides the one-dimensional code, thereby effectively improving universality and reliability of identifying an image. A morphological operation and a connected component analysis on an image are not needed, thereby effectively improving a velocity of identifying an image.

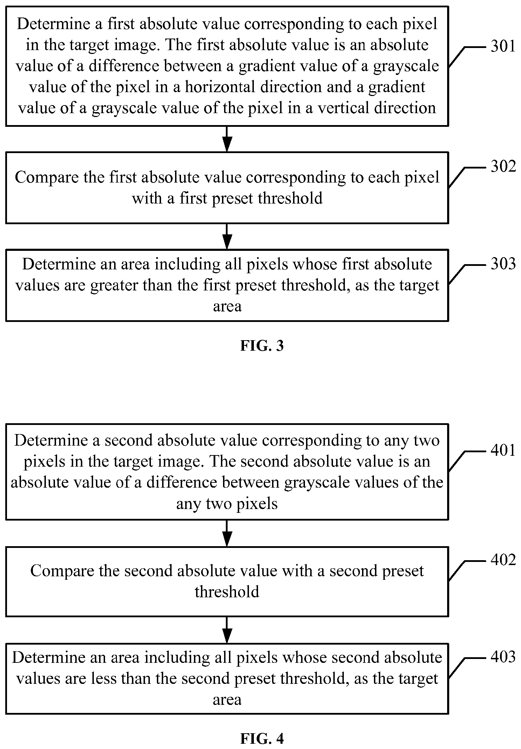

In some possible implementations, as shown in FIG. 3, in a case that the first image feature is a grayscale value, the determining a target area of the target image based on the first image feature includes steps 301 to 303.

In step S301, a first absolute value corresponding to each pixel in the target image is determined. The first absolute value is an absolute value of a difference between a gradient value of a grayscale value of the pixel in a horizontal direction and a gradient value of a grayscale value of the pixel in a vertical direction.

The target image includes multiple pixels. Each pixel has a corresponding first absolute value. A first absolute value corresponding to any pixel is an absolute value of a difference between a gradient value of a grayscale value of the pixel in a horizontal direction and a gradient value of a grayscale value of the pixel in a vertical direction.

In Step S302, the first absolute value corresponding to each pixel is compared with a first preset threshold.

Because the target image includes multiple pixels, the first absolute value corresponding to each pixel is compared with the first preset threshold.

In step S303, an area including all pixels whose first absolute values are greater than the first preset threshold is determined as the target area.

An area including all pixels whose first absolute values are greater than the first preset threshold is determined as the target area, and a smooth area including all pixels whose first absolute values are less than or equal to the first preset threshold is filtered out.

In practice, because a one-dimensional code/two-dimensional code image has relatively strong gradient change information, a gradient difference is used to roughly position a code area, to quickly filter out a smooth area in an image, to reduce interference caused during subsequently accurately positioning. A gradient difference calculation and a binary calculation are represented by using the following formulas:

$$G_{diff}=|G_x-G_y|, \; G_x=I_x+1-I_{x-1}, \; G_y=I_y+1-I_{y-1};$$

and

$$G_{diff}=255, \text{ if } G_{diff}>thr; \; G_{diff}=0, \text{ if } G_{diff}\leq thr.$$

I represents a grayscale value; x and y respectively represent a horizontal direction and a vertical direction; G represents a gradient value, a $G_{diff}$ represents a gradient difference; and thr represents a first preset threshold. The thr is usually approximately 70.

In a binary image, a rough code area is determined by analyzing a histogram of the image in a horizontal direction and a vertical direction.

In another possible implementation, as shown in FIG. 4, in a case that the first image feature is a grayscale value, the determining a target area of the target image based on the first image feature includes steps 401 to 403.

In step 401, a second absolute value corresponding to any two pixels in the target image is determined. The second absolute value is an absolute value of a difference between grayscale values of the any two pixels.

The target image includes multiple pixels. An absolute value of a difference between grayscale values of the any two pixels is calculated, and second absolute values corresponding to multiple pairs of pixels in the target image may be determined. For example, a second absolute value corresponding to a pixel a and a pixel b is represented by $I_{diff}$, and $I_{diff}=|I_a-I_b|$. $I_a$ represents a grayscale value of the pixel a, and $I_b$ represents a grayscale value of the pixel b.

In step S402, the second absolute value is compared with a second preset threshold.

In step S403, an area including all pixels whose second absolute values are less than the second preset threshold is determined as the target area.

Each second absolute value is compared with the second preset threshold, and the area including all pixels whose second absolute values are less than the second preset threshold is determined as the target area. Still referring to an example in step S401, it is assumed that $I_{diff}$ is less than a second preset threshold, in this case, the pixel a and the pixel b are pixels of the target area. Similarly, it is assumed that a second absolute value corresponding to a pixel c and a pixel d is less than the second preset threshold, by such analogy, an area including pixels that meet the above condition, for example, the pixel a, the pixel b, the pixel c and the pixel d, is determined as the target area.

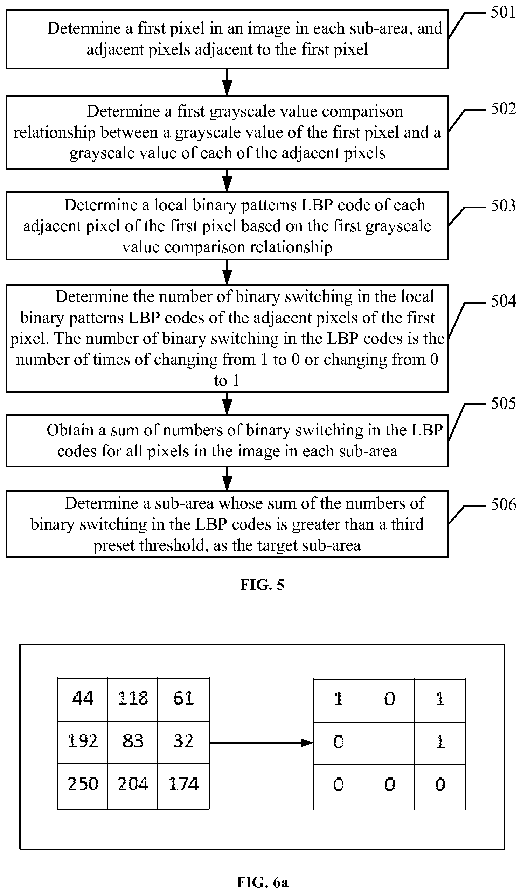

In some possible implementations, as shown in FIG. 5, the filtering images in the sub-areas to determine a target sub-area of the target image includes steps 501 to 506.

In step 501, a first pixel in an image in each sub-area, and adjacent pixels adjacent to the first pixel are determined.

In the embodiment of the present disclosure, the image in each sub-area includes multiple pixels. A pixel is first selected as the first pixel, and other pixels adjacent to the first pixel are second pixels.

In step S502, a first grayscale value comparison relationship between a grayscale value of the first pixel and a grayscale value of each of the adjacent pixels is determined.

The first grayscale value comparison relationship between the first pixel and the pixels adjacent to the first pixel is determined. For example, a grayscale value of a pixel is $I_0$, grayscale values of pixels adjacent to the pixel are respectively $I_1$, $I_2$, $I_3$, $I_4$ ...., and a comparison relationship between $I_0$ and $I_1$, $I_2$, $I_3$, $I_4$ ... is determined.

In step S503, a local binary patterns LBP code of each adjacent pixel of the first pixel is determined based on the first grayscale value comparison relationship.

In the embodiment of the present disclosure, after a comparison relationship between a grayscale value of the first pixel and grayscale values of the adjacent pixels in the image in each sub-area is determined, a local binary patterns LBP code of each adjacent pixel of the first pixel is determined based on the comparison relationship. In general, if the grayscale value of the first pixel is less than a grayscale value of an adjacent pixel, an LBP code of the adjacent pixel is 0. If the grayscale value of the first pixel is greater than or equal to a grayscale value of an adjacent pixel, an LBP code of the adjacent pixel is 1. Still referring to an example of step S502, an LBP code of $I_1$ is 0 provided that $I_0 < I_1$, and an LBP code of $I_2$ is 1 provided that $I_0 > I_2$.

In step S504, the number of binary switching in the local binary patterns LBP codes of the adjacent pixels of the first pixel is determined. The number of binary switching in the LBP codes is the number of times of changing from 1 to 0 or changing from 0 to 1.

In the embodiment of the present disclosure, the number of binary switching in the LBP code is determined based on an LBP code of each adjacent pixel of the first pixel. For example, the number of binary switching in the LBP code refers to the number of times of changing from 0 to 1 and changing from 1 to 0. This is not specifically limited herein.

In step S505, a sum of numbers of binary switching in the LBP codes for all pixels in the image in each sub-area is obtained.

In the embodiment of the present disclosure, a sum of numbers of binary switching in the LBP codes for all pixels in the image in each sub-area is counted.

In step S506, a sub-area whose sum of the numbers of binary switching in the LBP codes is greater than a third preset threshold is determined as the target sub-area.

In the embodiment of the present disclosure, a sub-area whose sum of the numbers of binary switching in the LBP codes is greater than a third preset threshold is determined as the target sub-area. Therefore, the target sub-area is an accurate code area, and the third preset threshold is usually 780. This is not specifically limited herein.

In practice, to detect a target area in any size in an image, a pyramid including images in different sizes usually needs to be calculated, a classifier obtained by training is called on each layer of the pyramid to perform detection on sliding windows, and output a position of a candidate window. To improve a detection speed, the windows may be quickly filtered by using an LBP feature value. A reason for using the feature is that a one-dimensional code/a two-dimensional code has a relatively strong texture feature. The LBP feature value has an incomparable advantage in an aspect of describing image texture information.

A binary relationship between a grayscale value of each pixel in an image and grayscale values of partial neighborhood pixels of the pixel is first calculated. LBP codes are formed based on the binary relationship in a particular manner. Then an LBP histogram is obtained by collecting statistics of the LBP codes of the target area, and is used as texture descriptions of the area.

$$LBP = \oplus_{k=1}^{N-1} s(I_c, I_k), \quad s(I_c, I_k) = \begin{cases} 1 & I_c \geq I_k \\ 0 & I_c < I_k \end{cases}$$

Formulas related to the LBP code is: $I_c$ is a grayscale value of a central pixel, $I_k(k=0, 1, 2, ..., N-1)$ is grayscale values of N neighborhood pixels that are distributed in equal intervals at the central pixel, $\oplus$ is a tandem operator, and s represents comparison. When $I_c \geq I_k$, $s(I_c, I_k) = 1$; and when $I_c < I_k$, $s(I_c, I_k) = 0$.

As shown in FIG. 6a, a grayscale value of a central pixel is compared with grayscale values of 8 neighborhood pixels. If the grayscale value of the neighborhood pixel is greater than or equal to the grayscale value of the central pixel, value of the neighborhood pixel in an LBP code sequence is 1, and if the grayscale value of the neighborhood pixel is less than the grayscale value of the central pixel, value of the neighborhood pixel in an LBP code sequence is 0. Therefore, the 8 neighborhood pixels after comparison are sequentially coded as an 8-bit binary number, including two ends of the adjacent pixels. The number of binary switching in the LBP corresponding to the central pixel is 4 (changing from 0 to 1 or 1 to 0).

To reduce operation complexity of the algorithm, only statistics of a sum of numbers of binary switching in the LBP of all pixels in each sliding window are collected. Actually this is effective compression on an original LBP code, and can also effectively reduce interference caused by noise in an image when ensuring no information is lost. A calculation method of the number of binary switching in the LBP is shown in FIG. 6a. For example, the number of binary switching in the LBP code from 0 to 1 or from 1 to 0 reflects a texture change of an image partial area.

The number of binary switching in the LBP is extracted for each pixel in a sliding window, and then a sum of numbers of binary switching in the LBP of all pixels in the window are accumulated. The accumulated sum of the numbers of binary switching in the LBP is compared with a preset threshold (the preset threshold in the present disclosure is 780). If the accumulated sum of the numbers of binary switching in the LBP is greater than the preset threshold, the sliding window area is determined to pass and next process is entered. If the accumulated sum of the numbers of binary switching in the LBP is not greater than the preset threshold, the process ends.

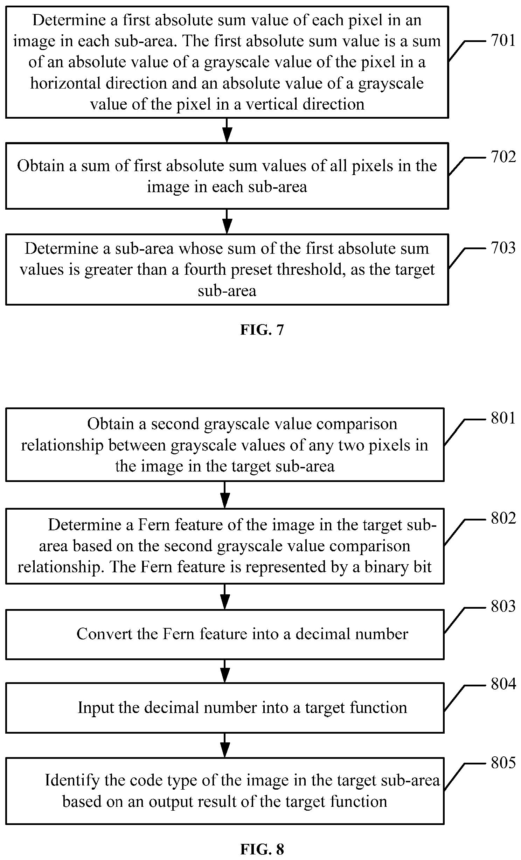

In some other possible implementations, as shown in FIG. 7, the filtering the sub-areas to determine a target sub-area of the target image includes steps 701 to 703.

In step 701, a first absolute sum value of each pixel in an image in each sub-area is determined. The first absolute sum value is a sum of an absolute value of a grayscale value of the pixel in a horizontal direction and an absolute value of a grayscale value of the pixel in a vertical direction.

In the embodiment of the present disclosure, an image in each sub-area includes multiple pixels, and a first absolute sum value of each pixel is obtained. For example, a first absolute sum value of a pixel a is a sum of an absolute value of a grayscale value of the pixel a in a horizontal direction and an absolute value of a grayscale value of the pixel a in a vertical direction.

In step S702, a sum of first absolute sum values of all pixels in the image in each sub-area is obtained.

In the embodiment of the present disclosure, because each sub-area includes multiple pixels, a sum of first absolute sum values of all pixels in the image in each sub-area is obtained. For example, a sub-area has a pixel a, a pixel b and a pixel c (this is to describe by using an example, and in practice, each sub-area has a lot of pixels), a first absolute sum value of the pixel a is $I_1$, a first absolute sum value of the pixel b is $I_2$, a first absolute sum value of the pixel b is $I_3$, and a first absolute sum value corresponding to the sub-area is $I_{sum}=I_1+I_2+I_3$.

In step S703, a sub-area whose sum of the first absolute sum values is greater than a fourth preset threshold, is determined as the target sub-area.

In the embodiment of the present disclosure, a sum of first absolute sum values corresponding to each sub-area is obtained, and a sub-area whose sum of the first absolute sum values is greater than a fourth preset threshold is determined as the target sub-area. For example, still referring to an example of step S703, it is assumed that $I_{sum}$ is greater than a fourth preset threshold, and the sub-area is determined as the target sub-area.

In some possible implementations, as shown in FIG. 8, in a case that the second image feature is a Fern feature, the obtaining a second image feature of an image in the target sub-area and the identifying a code type of the image in the target sub-area based on the second image feature includes steps 801 to 805.

In step S801, a second grayscale value comparison relationship between grayscale values of any two pixels in the image in the target sub-area is obtained.

In the embodiment of the present disclosure, grayscale values of any two pixels in the image in the target sub-area are obtained. For example, a grayscale value of a pixel a is $I_1$, and a grayscale value of a pixel b is $I_2$. It is assumed that $I_1>I_2$, $I_1>I_2$ is a second grayscale value comparison relationship between the pixel a and the pixel b.

In step S802, a Fern feature of the image in the target sub-area is determined based on the second grayscale value comparison relationship. The Fern feature is represented by a binary bit.

In step S803, the Fern feature is converted into a decimal number.

In step S804, the decimal number is inputted into a target function.

In step S805, the code type of the image in the target sub-area is identified based on an output result of the target function.

In an embodiment of the present disclosure, an input of the target function is the Fern feature in a form of a decimal number, and an output of the target function is a code result. In a case that a preset code type of the target function is a two-dimensional code, it is determined that a code type of the target image is a two-dimensional code if the output result is 1, and it is determined that the code type of the target image is not a two-dimensional code if the output result is 0. In a case that the preset code type of the target function is a one-dimensional code, it is determined that a code type of the target image is a one-dimensional code if the output result is 1, and it is determined that the code type of the target image is not a one-dimensional code if the output result is 0.

In practice, an image sliding window filtered by an LBP weak classifier is sent to a Fern feature calculation module to extract a Fern feature. The Fern feature is represented by n binary bits, and represents a decimal number in a range of 0 to $2^n-1$. Each binary bit represents a comparison relationship of grayscale values of a pair of pixels at any position in an image, as the following formula:

$f_{Fern}=b_{n-1}b_{n-2}...b_0$. $b_k=1$, if $I_i>I_j$; $b_k=0$, if $I_i\leq I_j$; $0\leq k<n$, where i and j represent any two pixels, and b represents a binary bit.

It can be learned that the Fern feature represents comparison relationship of grayscale values of several pairs of pixels in an image, and is suitable for detecting a target image including random monochrome areas, for example, a one-dimensional code/a two-dimensional code. Calculation complexity of the Fern feature is relatively low. Only basic operations such as taking a value, comparison, and shifting are needed to be performed on original grayscale value of an image, thereby achieving an object of quickly identifying an image.

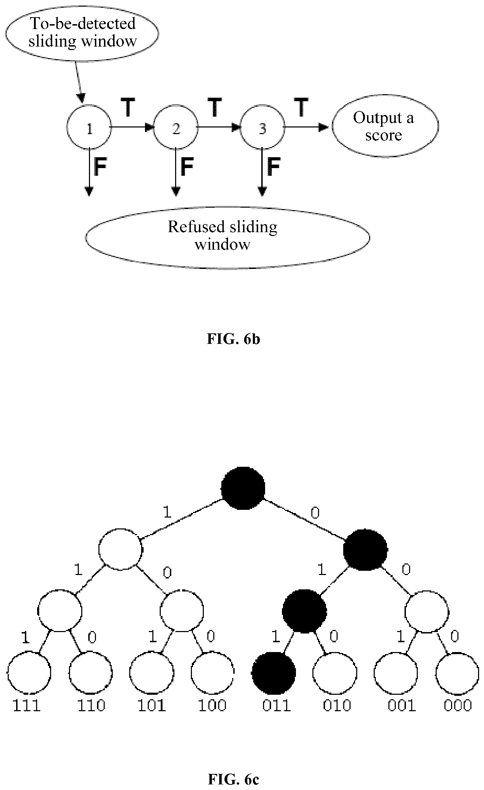

In practice, after a value $f_{Fern}$ of a Fern feaure of an image area within a sliding window is calculated, the value $f_{Fern}$ is inputted into a trained classifier. In the embodiment of the present disclosure, a cascade classifier structure (Cascade Boosting) proposed by Viola Jones is used. The structure is still a classical algorithm of quick detection in computer vision. A basic idea of algorithm is that strong classifiers are set as a level cascade structure according to an order of complexity. A training sample of each subsequent classifier is a sample that passes through all previous classifiers. If any one cascade classifier refuses a sliding window, the sliding window is not further detected any more. As shown in FIG. 6b, there are three classifiers. A Fern feature is inputted to a classifier 1. If the classifier 1 refuses a sliding window to which the Fern feature is inputted, detection on the sliding window is stopped. If the classifier 1 does not refuse the sliding window, the sliding window continues to be detected by a classifier 2, by such analogy.

Each classifier is a 2-class classifier, and may be regarded as a function h that is mapped from an input feature x to an output class w. In the embodiment of the present disclosure, a input feature value is a decimal number in a range of 0 to 64. The output class is 1 (belonging to a code of the class) or 0 (not belonging to a code of the class).

The function h is represented as: conf(x)=h(x,θ); and

$$w=\mathrm{sign}(\mathrm{conf}(x)-\mathrm{thr}), w=0,1.$$

0 is a parameter of a classifier, and is obtained by training a sample. The sign is a sign(x) function. When an input is greater than 0, an output is 1, and when an input is less than 0, an output is 0. Conf is a confidence score outputted by the classifier. The score is compared with a threshold thr obtained by training. If the score is greater than the threshold thr, the output class w=1, and if the score is less than the threshold thr, the output class w=0. When testing is performed, to reduce calculation complexity, a classifier mapping value obtained by training is stored as a fixed list, and the list is searched according to an inputted Fern feature value $f_{Fern}$ to obtain a corresponding confidence score.

In a training stage, a batch of different one-dimensional codes and two-dimensional codes in various angles, lights and shooting conditions are collected. To reduce differences in a same class, Fern features and classifiers are respectively trained for the one-dimensional code and the two-dimensional code. When testing is performed, one-dimensional code feature extraction and classification and two-dimensional code feature extraction and classification are respectively performed on each sliding window, and classification results w1 and w2 of two kinds of classifiers are obtained. If the two results are both 1, a result of a greater confidence score is selected as a final class for output.

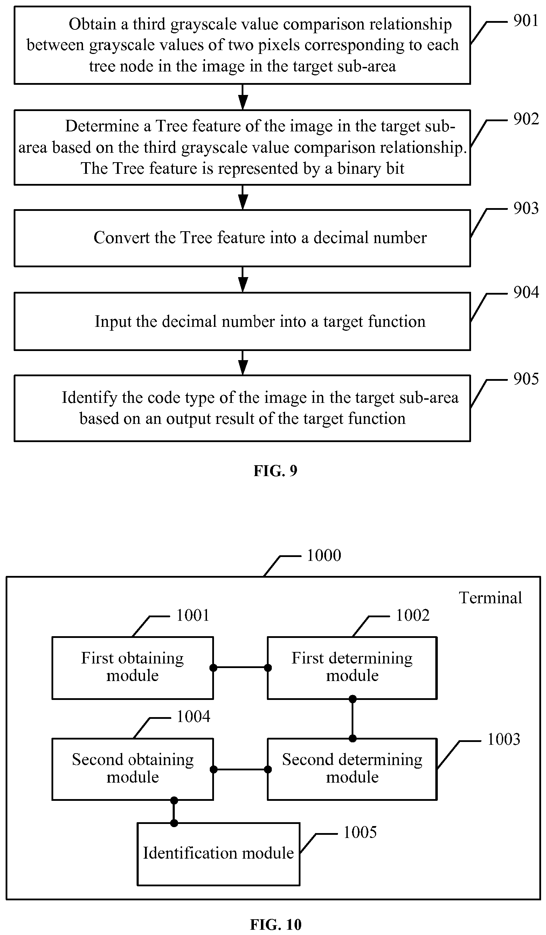

In some other possible implementations, as shown in FIG. 9, in a case that the second image feature is a Tree feature, the obtaining a second image feature of an image in the target sub-area and the identifying a code type of the image in the target sub-area based on the second image feature includes steps 901 to 905.

In step S901, a third grayscale value comparison relationship between grayscale values of two pixels corresponding to each tree node in the image in the target sub-area is obtained.

In the embodiment of the present disclosure, grayscale values of two pixels corresponding to each tree node in the image in the target sub-area are obtained. It is assumed that a grayscale value of a pixel a of a node is $I_1$, and a grayscale value of a pixel b of the node is $I_2$. $I_1 > I_2$ is a third grayscale value comparison relationship between the pixel a and the pixel b provided that $I_1 > I_2$.

In step S902, a Tree feature of the image in the target sub-area is determined based on the third grayscale value comparison relationship. The Tree feature is represented by a binary bit.

In step S903, the Tree feature is converted into a decimal number.

In step S904, the decimal number is inputted into a target function.

In step S905, the code type of the image in the target sub-area is identified based on an output result of the target function.

Similar to step S805, an input of the target function is the Tree feature in a form of a decimal number, and an output of the target function is a code result. In a case that a preset code type of the target function is a two-dimensional code, it is determined that a code type of the target image is a two-dimensional code if the output result is 1, and it is determined that the code type of the target image is not a two-dimensional code if the output result is 0. In a case that the preset code type of the target function is a one-dimensional code, it is determined that a code type of the target image is a one-dimensional code if the output result is 1, and it is determined that the code type of the target image is not a one-dimensional code if the output result is 0.

In practice, using a three-layer tree feature in FIG. 6c as an example, in each tree node, grayscale values of two pixels are compared. A greater one takes a node left branch, and a less one takes a right branch. Each branch is analogized in sequence until reaching a leaf node. Each left branch is assigned with 1, and each right branch is assigned with 0. According to 1 or 0 on a tandem branch of the route taken, a final binary bit is obtained when reaching a leaf node at a bottom layer. In FIG. 6c, the final binary bit is 011, and is 3 after converted into a decimal number. That is, a final feature value is 3. Therefore, a statistical value of the number of binary switching in the LBP may also be converted into a statistical value of a sobel gradient. A sobel operator is an operator relatively usually used for gradient calculation. A calculation formula of the operator is as follows:

$$G_x = z_3 + 2*z_6 + z_9 - (z_1 + 2*z_4 + z_7)$$

$$G_y = z_7 + 2*z_8 + z_9 - (z_1 + 2*z_2 + z_3)$$

$$G = |G_x| + |G_y|$$

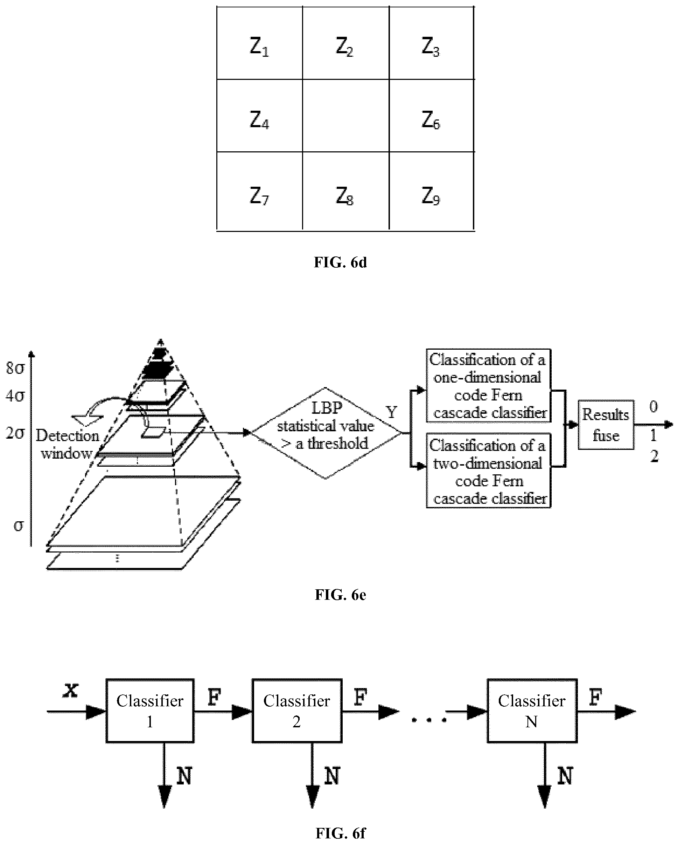

In the formula, $z_1$ to $z_9$ represent gradient values of pixels with a 3*3 neighborhood. As shown in FIG. 6d, because a sobel gradient operator can reflect a gradient change of an image and texture complexity, filtering for the number of binary switching in the LBP may be changed to filtering for sobel gradient value, to achieve a same rough filtering effect.

In practice, a complete classification architecture is shown in FIG. 6e, including two parts, that is, LBP weak classifier filtering and fern cascade classifier classification. Final output results are 0, 1, and 2, where 0 represents no code, 1 represents a one-dimensional code, and 2 represents a two-dimensional code. According to different features used, the classifier may alternatively be a classifier of another structure such as a soft cascade. The soft cascade is an improved cascade classifier structure. As shown in FIG. 6f, a conventional cascade classifier structure includes different layers. Each layer includes several classifiers. An input passes through each classifier in sequence and output values of classifiers at the layer are added up and are compared with a threshold for the layer, to determine whether to pass to next layer. The soft cascade does not have layers. A score obtained when the input passes through each classifier is compared with a threshold for the classifier, thereby determining whether to pass to next classifier. A calculation speed of the soft cascade is quicker than that of the conventional cascade classifier structure because it may be determined whether to continue when passing through a weak classifier.

By using descriptions of the foregoing method for image identification, in practice, to verify an improvement effect of the identification method in the embodiment of the present disclosure on a code scanning engine speed, some terminals are selected to be tested, and running time and an identification rate are mainly tested. A contrast experiment of running time is divided into two groups. One group is a contrast experiment (as shown in Table 1) of average running time, which is provided with a predetermining algorithm, and average running time, which is not provided with a predetermining algorithm, of samples having no code on main models. The other group is a contrast experiment (as shown in Table 2) of average running time, which is provided with a predetermining algorithm, and average running time, which is not provided with a predetermining algorithm, of samples having code (a one-dimensional code/a two-dimensional code).

Table 1: Contrast of testing speeds of samples having no code on different models

| Model | Average Running Time (ms) | Average Running Time (ms) |
|---|---|---|
| | Provided with a predetermining algorithm | Not provided with a predetermining algorithm |
| Iphone 6plus | 6.5 | 140 |
| Iphone 5s | 8 | 140 |
| Iphone 5 | 21 | 150 |
| Galaxy s6Edge | 40 | 400 |
| Xiaomi Note | 40 | 140 |
| Nexus 5 | 45 | 340 |

Table 2: Contrast of testing speeds of samples having code

| | Old Version of a QBar Code Scanning Engine | New Version of a QBar Code Scanning Engine | |
|---|---|---|---|
| | One-dimensional code Identification time | Two-dimensional code Identification time | Total identification time |
| Provided with a predetermining algorithm | 414.603 | 253.297 | 333.95 |
| Not provided with a predetermining algorithm | 397.089 | 381.821 | 389.455 |

It can be learned that for an image having no code, each processing speed of a main model is improved to a relatively great extent, and average running time of some models reduces to be less than 10ms. For an image having code, average identification time of a one-dimensional code is slightly greater than an original method, but the difference is not great. Average identification time of a two-dimensional code relatively shortens by approximately 130ms, and total identification time shortens by approximately 50ms.

In an aspect of an identification rate, contrast of identification rates of one-dimensional codes and two-dimensional codes on different sample sets are respectively tested (respectively as shown in FIG. 3 and FIG. 4).

Table 3: Contrast of identification rates of two-dimensional codes

| Testing Set | | Google Standard | Mobile Phone Real Shooting | Printed Receipt Real Shooting |
|---|---|---|---|---|
| Correct rate (%) | Provided with a predetermining algorithm | 82.81 | 69.49 | 32.59 |
| Correct rate (%) | Closing a predetermining algorithm | 82.81 | 69.83 | 32.59 |

Table 4: Contrast of identification rates of one-dimensional codes

| Testing Set | | Google Standard | Fuzzy Barcode |
|---|---|---|---|
| Correct rate (%) | Provided with a predetermining algorithm | 61.8 | 27.92 |
| Correct rate (%) | Closing a predetermining algorithm | 61.8 | 27.92 |

Testing statistics indicates that except that a two-dimensional code testing set of mobile phone real shooting suffers a few (0.34%) performance losses, identification rates of other sample sets remain unchanged. Using the method for image identification ensures identification performance, and reduces blocking of a client, so that an identification response is more timely.

To facilitate better implementation of the foregoing method of the embodiment of the present disclosure, the following further provides a related apparatus configured to cooperatively implement the foregoing method.

As shown in FIG. 10, FIG. 10 is a schematic structural diagram of a terminal 1000 according to an embodiment of the present disclosure. The terminal 1000 includes: a first obtaining module 1001, a first determining module 1002, a second determining module 1003, a second obtaining module 1004, and an identification module 1005.

The first obtaining module 1001 is configured to obtain a first image feature of a target image.

The first determining module 1002 is configured to determine a target area of the target image based on the first image feature.

The second determining module 1003 is configured to divide the target area into multiple sub-areas, and filter the sub-areas to determine a target sub-area of the target image.

The second obtaining module 1004 is configured to obtain a second image feature of an image in the target sub-area.

The identification module 1005 is configured to identify a code type of the image in the target sub-area based on the second image feature. The code type includes at least one of a one-dimensional code, a two-dimensional code and a non-code type.

In some possible implementations, the first image feature is a grayscale value, and the first determining module 1002 is further configured to: determine a first absolute value corresponding to each pixel in the target image, where the first absolute value is an absolute value of a difference between a gradient value of a grayscale value of the pixel in a horizontal direction and a gradient value of a grayscale value of the pixel in a vertical direction; compare the first absolute value corresponding to each pixel with a first preset threshold; and determine an area including all pixels whose first absolute values are greater than the first preset threshold, as the target area.

In some possible implementations, the first image feature is a grayscale value, and the first determining module 1002 is further configured to: determine a second absolute value corresponding to any two pixels in the target image, where the second absolute value is an absolute value of a difference between grayscale values of the any two pixels; compare the second absolute value with a second preset threshold; and determine an area including all pixels whose second absolute values are less than the second preset threshold, as the target area.

In some possible implementations, the second determining module 1003 is further configured to: determine a first pixel in an image in each sub-area, and adjacent pixels adjacent to the first pixel; determine a first grayscale value comparison relationship between a grayscale value of the first pixel and a grayscale value of each of the adjacent pixels; determine a local binary patterns LBP code of each adjacent pixel of the first pixel based on the first grayscale value comparison relationship; determine the number of binary switching in the local binary patterns LBP codes of the adjacent pixels of the first pixel, where the number of binary switching in the LBP codes is the number of times of changing from 1 to 0 or changing from 0 to 1; obtain a sum of numbers of binary switching in the LBP codes for all pixels in the image in each sub-area; and determine a sub-area whose sum of the numbers of binary switching in the LBP codes is greater than a third preset threshold, as the target sub-area.

In some possible implementations, the second determining module 1003 is further configured to: determine a first absolute sum value of each pixel in an image in each sub-area, where the first absolute sum value is a sum of an absolute value of a grayscale value of the pixel in a horizontal direction and an absolute value of a grayscale value of the pixel in a vertical direction; obtain a sum of first absolute sum values of all pixels in the image in each sub-area; and determine a sub-area whose sum of the first absolute sum values is greater than a fourth preset threshold, as the target sub-area.

In some possible implementations, in a case that the second image feature is a Fern feature, the second obtaining module 1004 is further configured to: obtain a second grayscale value comparison relationship between grayscale values of any two pixels in the image in the target sub-area; and determine a Fern feature of the image in the target sub-area based on the second grayscale value comparison relationship, where the Fern feature is represented by a binary bit; and the identification module 1005 is further configured to: convert the Fern feature into a decimal number; input the decimal number into a target function; and identify the code type of the image in the target sub-area based on an output result of the target function.

In some possible implementations, in a case that the second image feature is a Tree feature, the second obtaining module 1004 is further configured to: obtain a third grayscale value comparison relationship between grayscale values of two pixels corresponding to each tree node in the image in the target sub-area; and determine a Tree feature of the image in the target sub-area based on the third grayscale value comparison relationship, where the Tree feature is represented by a binary bit; and the identification module 1005 is further configured to: convert the Tree feature into a decimal number; input the decimal number into a target function; and identify the code type of the image in the target sub-area based on an output result of the target function.

In conclusion, after a first image feature of a target image is obtained, a target area of the target image is determined based on the first image feature. For example, an approximate code area is determined based on the first image feature. A target sub-area of the target image is determined by filtering images in the target area. A code type of the image in the target sub-area is determined based on an obtained second image feature of an image in the target sub-area. For example, an accurate code area is determined in the approximate code area, and then the code type of the image is determined on the accurate code area, for example, a one-dimensional code, a two-dimensional code or a non-code type. It can be learned that the code type is not limited to a one-dimensional code, and may alternatively be other code images besides the one-dimensional code, thereby effectively improving universality and reliability of identifying an image. A morphological operation and a connected component analysis on an image are not needed, thereby effectively improving a velocity of identifying an image.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of the embodiments.

In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the existing technology, or all or some of the technical solutions may be implemented in the form of a software product. The computer software product is stored in a storage medium and includes several instructions for instructing a computer device (which may be a personal computer, a terminal, or a network device) to perform all or some of the steps of the methods described in the embodiments of the present disclosure. The foregoing storage medium includes: any medium that can store program code, such as a USB flash memory drive, a removable hard disk, a Read-Only Memory (ROM), a Random Access Memory (RAM), a magnetic disk, or an optical disc.

The foregoing embodiments are merely intended for describing the technical solutions of the present disclosure, but not for limiting the present disclosure. Although the present disclosure is described in detail with reference to the foregoing embodiments, a person of ordinary skill in the art should understand that they may still make modifications to the technical solutions described in the foregoing embodiments or make equivalent replacements to some technical features thereof, without departing from and scope of the technical solutions of the embodiments of the present disclosure. The invention is defined by the appended claims.

**Claims**

1.  A method for image identification, comprising:

    (i) obtaining (201) a first image feature of a target image, wherein the first image feature is a grayscale value;
    (ii) determining (202) a target area of the target image based on the first image feature, comprising:

    determining (301) a first absolute value corresponding to each pixel in the target image, wherein the first absolute value is an absolute value of a difference between a gradient value of a grayscale value of the pixel in a horizontal direction and a gradient value of a grayscale value of the pixel in a vertical direction;
    comparing (302) the first absolute value corresponding to each pixel with a first preset threshold; and
    determining (303) an area comprising all pixels whose first absolute values are greater than the first preset threshold, as the target area;

    (iii) dividing (203) the target area into a plurality of sub-areas, and filtering (203) the sub-areas to determine a target sub-area of the target image, comprising:

    determining (501) a first pixel in an image in each sub-area, and adjacent pixels adjacent to the first pixel;
    determining (502) a first grayscale value comparison relationship between a grayscale value of the first pixel and a grayscale value of each of the adjacent pixels;
    determining (503) a local binary patterns LBP code of each adjacent pixel of the first pixel based on the first grayscale value comparison relationship;
    determining (504) the number of binary switching in the local binary patterns LBP codes of the adjacent pixels of the first pixel, wherein the number of binary switching in the LBP codes is the number of times of changing from 1 to 0 or changing from 0 to 1;
    obtaining (505) a sum of numbers of binary switching in the LBP codes for all pixels in the image in each sub-area; and
    determining (506) a sub-area whose sum of the numbers of binary switching in the LBP codes is greater than a third preset threshold, as the target sub-area;

    (iv) obtaining (204) a second image feature of an image in the target sub-area; and

(v) identifying (205) a code type of the image in the target sub-area based on the second image feature, wherein the code type comprises at least one of a one-dimensional code, a two-dimensional code and a non-code type,

wherein the second image feature is a Fern feature;
the obtaining (204) a second image feature of an image in the target sub-area comprises:

obtaining (801) a second grayscale value comparison relationship between grayscale values of any two pixels in the image in the target sub-area; and
determining (802) a Fern feature of the image in the target sub-area based on the second grayscale value comparison relationship, wherein the Fern feature is represented by a binary bit; and

the identifying (205) a code type of the image in the target sub-area based on the second image feature comprises:

converting (803) the Fern feature into a decimal number;
inputting (804) the decimal number into a target function; and
identifying (805) the code type of the image in the target sub-area based on an output result of the target function;

or
wherein the second image feature is a Tree feature;
the obtaining (204) a second image feature of an image in the target sub-area comprises:

obtaining (901) a third grayscale value comparison relationship between grayscale values of two pixels corresponding to each tree node in the image in the target sub-area; and
determining (902) a Tree feature of the image in the target sub-area based on the third grayscale value comparison relationship, wherein the Tree feature is represented by a binary bit; and

the identifying (205) a code type of the image in the target sub-area based on the second image feature comprises:

converting (903) the Tree feature into a decimal number;
inputting (904) the decimal number into a target function; and
identifying (905) the code type of the image in the target sub-area based on an output result of the target function.

2. A terminal (1000), comprising:

(i) a first obtaining module (1001), configured to obtain a first image feature of a target image, wherein the first image feature is a grayscale value;
(ii) a first determining module (1002), configured to determine a target area of the target image based on the first image feature, wherein the first determining module (1002) is further configured to:

determine a first absolute value corresponding to each pixel in the target image, wherein the first absolute value is an absolute value of a difference between a gradient value of a grayscale value of the pixel in a horizontal direction and a gradient value of a grayscale value of the pixel in a vertical direction;
compare the first absolute value corresponding to each pixel with a first preset threshold; and
determine an area comprising all pixels whose first absolute values are greater than the first preset threshold, as the target area;

(iii) a second determining module (1003), configured to divide the target area into a plurality of sub-areas, and filter the sub-areas to determine a target sub-area of the target image, wherein the second determining module (1003) is further configured to:

determine a first pixel in an image in each sub-area, and adjacent pixels adjacent to the first pixel;
determine a comparison relationship between a grayscale value of the first pixel and a grayscale value of each of the adjacent pixels;
determine a local binary patterns LBP code of each adjacent pixel of the first pixel based on the first grayscale value comparison relationship;

determine the number of binary switching in the local binary patterns LBP codes of the adjacent pixels of the first pixel, wherein the number of binary switching in the LBP codes is the number of times of changing from 1 to 0 or changing from 0 to 1;

obtain a sum of numbers of binary switching in the LBP codes for all pixels in the image in each sub-area; and determine a sub-area whose sum of the numbers of binary switching in the LBP codes is greater than a third preset threshold, as the target sub-area;

(iv) a second obtaining module (1004), configured to obtain a second image feature of an image in the target sub-area; and

(v) an identification module (1005), configured to identify a code type of the image in the target sub-area based on the second image feature, wherein the code type comprises at least one of a one-dimensional code, a two-dimensional code and a non-code type,

wherein the second image feature is a Fern feature;

the second obtaining module (1004) is further configured to: obtain a second grayscale value comparison relationship between grayscale values of any two pixels in the image in the target sub-area; and determine a Fern feature of the image in the target sub-area based on the second grayscale value comparison relationship, wherein the Fern feature is represented by a binary bit; and

the identification module (1005) is further configured to: convert the Fern feature into a decimal number; input the decimal number into a target function; and identify the code type of the image in the target sub-area based on an output result of the target function,

or

wherein the second image feature is a Tree feature;

the second obtaining module (1004) is further configured to: obtain a third grayscale value comparison relationship between grayscale values of two pixels corresponding to each tree node in the image in the target sub-area; and determine a Tree feature of the image in the target sub-area based on the third grayscale value comparison relationship, wherein the Tree feature is represented by a binary bit; and

the identification module (1005) is further configured to: convert the Tree feature into a decimal number; input the decimal number into a target function; and identify the code type of the image in the target sub-area based on an output result of the target function.

3. A non-volatile storage medium storing program instructions, wherein the program instructions, when being executed by a processor, causes the processor to perform the method for image identification according to claim 1.

**Patentansprüche**

1. Verfahren zur Bildidentifikation, umfassend:

(i) Erhalten (201) eines ersten Bildmerkmals eines Zielbildes, wobei das erste Bildmerkmal ein Graustufenwert ist;

(ii) Bestimmen (202) eines Zielbereichs des Zielbildes auf der Grundlage des ersten Bildmerkmals, umfassend:

Bestimmen (301) eines ersten absoluten Wertes, der jedem Pixel in dem Zielbild entspricht, wobei der erste absolute Wert ein absoluter Wert einer Differenz zwischen einem Gradientenwert eines Graustufenwertes des Pixels in einer horizontalen Richtung und einem Gradientenwert eines Graustufenwertes des Pixels in einer vertikalen Richtung ist;

Vergleichen (302) des ersten absoluten Wertes, der jedem Pixel entspricht, mit einem ersten voreingestellten Schwellenwert; und

Bestimmen (303) eines Bereichs, der alle Pixel umfasst, deren erste absolute Werte größer als der erste voreingestellte Schwellenwert sind, als den Zielbereich;

(iii) Unterteilen (203) des Zielbereichs in eine Vielzahl von Unterbereichen und Filtern (203) der Unterbereiche, um einen Ziel-Unterbereich des Zielbildes zu bestimmen, umfassend:

Bestimmen (501) eines ersten Pixels in einem Bild in jedem Unterbereich und benachbarter Pixel, die an das erste Pixel angrenzen;

Bestimmen (502) einer ersten Graustufenwert-Vergleichsbeziehung zwischen einem Graustufenwert des ersten Pixels und einem Graustufenwert von jedem der benachbarten Pixel;

Bestimmen (503) eines lokalen Binärmuster-LBP-Codes jedes benachbarten Pixels des ersten Pixels auf der Grundlage der ersten Graustufenwert-Vergleichsbeziehung;

Bestimmen (504) der Anzahl der Binärumschaltungen in den lokalen Binärmuster-LBP-Codes der benachbarten Pixel des ersten Pixels, wobei die Anzahl der Binärumschaltungen in den LBP-Codes die Anzahl der Male des Wechsels von 1 auf 0 oder des Wechsels von 0 auf 1 ist;

Erhalten (505) einer Summe von Anzahlen von Binärumschaltungen in den LBP-Codes für alle Pixel in dem Bild in jedem Unterbereich; und

Bestimmen (506) eines Unterbereichs, dessen Summe der Anzahlen von Binärumschaltungen in den LBP-Codes größer als ein dritter voreingestellter Schwellenwert ist, als den Ziel-Unterbereich;

(iv) Erhalten (204) eines zweiten Bildmerkmals eines Bildes in dem Ziel-Unterbereich; und

(v) Identifizieren (205) eines Code-Typs des Bildes in dem Ziel-Unterbereich auf der Grundlage des zweiten Bildmerkmals, wobei der Code-Typ mindestens einen aus einem eindimensionalen Code, einem zweidimensionalen Code und einem Nicht-Code-Typ umfasst,

wobei das zweite Bildmerkmal ein Farn-Merkmal ist;
wobei das Erhalten (204) eines zweiten Bildmerkmals eines Bildes in dem Ziel-Unterbereich umfasst:

Erhalten (801) einer zweiten Graustufenwert-Vergleichsbeziehung zwischen Graustufenwerten von zwei beliebigen Pixeln in dem Bild in dem Ziel-Unterbereich; und

Bestimmen (802) eines Farn-Merkmals des Bildes in dem Ziel-Unterbereich auf der Grundlage der zweiten Graustufenwert-Vergleichsbeziehung, wobei das Farn-Merkmal durch ein binäres Bit dargestellt wird; und

das Identifizieren (205) eines Code-Typs des Bildes in dem Ziel-Unterbereich auf der Grundlage des zweiten Bildmerkmals umfasst:

Konvertieren (803) des Farn-Merkmals in eine Dezimalzahl;
Eingeben (804) der Dezimalzahl in eine Zielfunktion; und
Identifizieren (805) des Code-Typs des Bildes in dem Ziel-Unterbereich auf der Grundlage eines Ausgabeergebnisses der Zielfunktion;
oder

wobei das zweite Bildmerkmal ein Baum-Merkmal ist;
wobei das Erhalten (204) eines zweiten Bildmerkmals eines Bildes in dem Ziel-Unterbereich umfasst:

Erhalten (901) einer dritten Graustufenwert-Vergleichsbeziehung zwischen Graustufenwerten von zwei Pixeln, die jedem Baumknoten in dem Bild in dem Ziel-Unterbereich entsprechen; und

Bestimmen (902) eines Baum-Merkmals des Bildes in dem Ziel-Unterbereich auf der Grundlage der dritten Graustufenwert-Vergleichsbeziehung, wobei das Baum-Merkmal durch ein binäres Bit dargestellt wird; und wobei das Identifizieren (205) eines Code-Typs des Bildes in dem Ziel-Unterbereich auf der Grundlage des zweiten Bildmerkmals umfasst:

Umwandeln (903) des Baum-Merkmals in eine Dezimalzahl;
Eingeben (904) der Dezimalzahl in eine Zielfunktion; und
Identifizieren (905) des Code-Typs des Bildes in dem Ziel-Unterbereich auf der Grundlage eines Ausgabeergebnisses der Zielfunktion.

2. Endgerät (1000), umfassend:

(i) ein erstes Erfassungsmodul (1001), das konfiguriert ist, um ein erstes Bildmerkmal eines Zielbildes zu erhalten, wobei das erste Bildmerkmal ein Graustufenwert ist;

(ii) ein erstes Bestimmungsmodul (1002), das konfiguriert ist, um einen Zielbereich des Zielbildes auf der Grundlage des ersten Bildmerkmals zu bestimmen, wobei das erste Bestimmungsmodul (1002) des Weiteren konfiguriert ist, um:

einen ersten absoluten Wert, der jedem Pixel in dem Zielbild entspricht, zu bestimmen, wobei der erste absolute Wert ein absoluter Wert einer Differenz zwischen einem Gradientenwert eines Graustufenwertes des Pixels in einer horizontalen Richtung und einem Gradientenwert eines Graustufenwertes des Pixels in einer vertikalen Richtung ist;

den ersten absoluten Wert, der jedem Pixel entspricht, mit einem ersten voreingestellten Schwellenwert zu vergleichen; und

einen Bereich, der alle Pixel umfasst, deren erste absolute Werte größer als der erste voreingestellte Schwellenwert sind, als den Zielbereich zu bestimmen;

(iii) ein zweites Bestimmungsmodul (1003), das konfiguriert ist, um den Zielbereich in eine Vielzahl von Unterbereichen zu unterteilen und die Unterbereiche zu filtern, um einen Ziel-Unterbereich des Zielbildes zu bestimmen, wobei das zweite Bestimmungsmodul (1003) des Weiteren konfiguriert ist, um:

einen ersten Pixel in einem Bild in jedem Unterbereich und benachbarte Pixel, die an das erste Pixel angrenzen, zu bestimmen;

eine erste Vergleichsbeziehung zwischen einem Graustufenwert des ersten Pixels und einem Graustufenwert von jedem der benachbarten Pixel zu bestimmen;

einen lokalen Binärmuster-LBP-Code jedes benachbarten Pixels des ersten Pixels basierend auf der ersten Graustufenwert-Vergleichsbeziehung zu bestimmen;

die Anzahl der Binärumschaltungen in den lokalen Binärmuster-LBP-Codes der benachbarten Pixel des ersten Pixels zu bestimmen, wobei die Anzahl der Binärumschaltungen in den LBP-Codes die Anzahl der Male des Wechsels von 1 auf 0 oder des Wechsels von 0 auf 1 ist;

eine Summe von Anzahlen von Binärumschaltungen in den LBP-Codes für alle Pixel in dem Bild in jedem Unterbereich zu erhalten; und

einen Unterbereich, dessen Summe der Anzahlen von Binärumschaltungen in den LBP-Codes größer als ein dritter voreingestellter Schwellenwert ist, als den Ziel-Unterbereich, zu bestimmen;

(iv) ein zweites Erfassungsmodul (1004), das konfiguriert ist, um ein zweites Bildmerkmal eines Bildes in dem Ziel-Unterbereich zu erfassen; und

(v) ein Identifikationsmodul (1005), das konfiguriert ist, um einen Code-Typ des Bildes in dem Ziel-Unterbereich auf der Grundlage des zweiten Bildmerkmals zu identifizieren, wobei der Code-Typ mindestens einen von einem eindimensionalen Code, einem zweidimensionalen Code und einem Nicht-Code-Typ umfasst,

wobei das zweite Bildmerkmal ein Farn-Merkmal ist;

wobei das zweite Erfassungsmodul (1004) des Weiteren konfiguriert ist, um: eine zweite Graustufenwert-Vergleichsbeziehung zwischen Graustufenwerten von beliebigen zwei Pixeln in dem Bild in dem Ziel-Unterbereich zu erhalten; und ein Farn-Merkmal des Bildes in dem Ziel-Unterbereich auf der Grundlage der zweiten Graustufenwert-Vergleichsbeziehung zu bestimmen, wobei das Farn-Merkmal durch ein binäres Bit dargestellt wird; und

wobei das Identifikationsmodul (1005) des Weiteren konfiguriert, um: das Farn-Merkmal in eine Dezimalzahl umzuwandeln; die Dezimalzahl in eine Zielfunktion einzugeben; und den Code-Typ des Bildes in dem Ziel-Unterbereich basierend auf einem Ausgabeergebnis der Zielfunktion zu identifizieren,

oder

wobei das zweite Bildmerkmal ein Baum-Merkmal ist;

wobei das zweite Erfassungsmodul (1004) des Weiteren konfiguriert ist, um: eine dritte Graustufenwert-Vergleichsbeziehung zwischen Graustufenwerten von zwei Pixeln zu erhalten, die jedem Baumknoten in dem Bild in dem Ziel-Unterbereich entsprechen; und ein Baum-Merkmal des Bildes in dem Ziel-Unterbereich basierend auf der dritten Graustufenwert-Vergleichsbeziehung zu bestimmen, wobei das Baum-Merkmal durch ein binäres Bit dargestellt wird; und

wobei das Identifizierungsmodul (1005) des Weiteren konfiguriert ist, um: das Baum-Merkmal in eine Dezimalzahl umzuwandeln; die Dezimalzahl in eine Zielfunktion einzugeben; und den Code-Typ des Bildes in dem Ziel-Unterbereich basierend auf einem Ausgabeergebnis der Zielfunktion zu identifizieren.

3. Nichtflüchtiges Speichermedium, das Programmanweisungen speichert, wobei die Programmanweisungen, wenn sie von einem Prozessor ausgeführt werden, den Prozessor veranlassen, das Verfahren zur Bildidentifikation nach Anspruch 1 durchzuführen.

**EP 3 493 101 B1**

**Revendications**

1. Procédé d'identification d'images, comprenant:

(i) obtenir (201) une première caractéristique d'image d'une image cible, dans lequel la première caractéristique d'image est une valeur d'échelle de gris;
(ii) déterminer (202) une zone cible de l'image cible sur la base de la première caractéristique d'image, comprenant:

déterminer (301) une première valeur absolue correspondant à chaque pixel dans l'image cible, dans lequel la première valeur absolue est une valeur absolue d'une différence entre une valeur de gradient d'une valeur d'échelle de gris du pixel dans une direction horizontale et une valeur de gradient d'une valeur d'échelle de gris du pixel dans une direction verticale,
comparer (302) la première valeur absolue correspondant à chaque pixel, à une première valeur de seuil prédéfinie; et
déterminer (303) en tant que zone cible une zone comprenant tous les pixels dont les premières valeurs absolues sont supérieures à la première valeur de seuil prédéfinie;

(iii) diviser (203) la zone cible en une pluralité de sous-zones, et filtrer (203) les sous-zones pour déterminer une sous-zone cible de l'image cible, comprenant:

déterminer (501) un premier pixel dans une image dans chaque sous-zone, et des pixels voisins qui sont adjacents au premier pixel;
déterminer (502) une première relation de comparaison de valeurs d'échelle de gris entre une valeur d'échelle de gris du premier pixel et une valeur d'échelle de gris de chacun des pixels voisins;
déterminer (503) un code LBP de motifs binaires locaux de chaque pixel voisin du premier pixel sur la base de la première relation de comparaison de valeurs d'échelle de gris;
déterminer (504) le nombre de commutations binaires dans les codes LBP de motifs binaires locaux des pixels voisins du premier pixel, dans lequel le nombre de commutations binaires dans les codes LBP est le nombre de fois que l'on passe de 1 à 0 ou de 0 à 1;
obtenir (505) une somme de nombres de commutations binaires dans les codes LBP pour tous les pixels dans l'image dans chaque sous-zone; et
déterminer (506) en tant que sous-zone cible une sous-zone dont la somme des nombres de commutations binaires dans les codes LBP est supérieure à une troisième valeur de seuil prédéfinie;

(iv) obtenir (204) une deuxième caractéristique d'image d'une image dans la sous-zone cible; et
(v) identifier (205) un type de code de l'image dans la sous-zone cible sur la base de la deuxième caractéristique d'image, dans lequel le type de code comprend au moins l'un parmi un code unidimensionnel, un code bidimensionnel et un type non code,

dans lequel la deuxième caractéristique d'image est une caractéristique de fougère;
dans lequel l'obtention (204) d'une deuxième caractéristique d'image d'une image dans la sous-zone cible comprend:

obtenir (801) une deuxième relation de comparaison de valeurs d'échelle de gris entre des valeurs d'échelle de gris de deux pixels quelconques dans l'image dans la sous-zone cible; et
déterminer (802) une caractéristique de fougère de l'image dans la sous-zone cible sur la base de la deuxième relation de comparaison de valeurs d'échelle de gris, dans lequel la caractéristique de fougère est représentée par un bit binaire; et

l'identification (205) d'un type de code de l'image dans la sous-zone cible sur la base de la deuxième caractéristique d'image comprend:

convertir (803) la caractéristique de fougère en un nombre décimal;
entrer (804) le nombre décimal dans une fonction cible; et
identifier (805) le type de code de l'image dans la sous-zone cible sur la base d'un résultat de sortie de la fonction cible;

22

ou

dans lequel la deuxième caractéristique d'image est une caractéristique d'arbre; dans lequel l'obtention (204) d'une deuxième caractéristique d'image d'une image dans la sous-zone cible comprend:

> obtenir (901) une troisième relation de comparaison de valeurs d'échelle de gris entre des valeurs d'échelle de gris de deux pixels correspondant à chaque nœud d'arbre dans l'image dans la sous-zone cible; et
>
> déterminer (902) une caractéristique d'arbre de l'image dans la sous-zone cible sur la base de la troisième relation de comparaison de valeurs d'échelle de gris, dans lequel la caractéristique d'arbre est représentée par un bit binaire; et

dans lequel l'identification (205) d'un type de code de l'image dans la sous-zone cible sur la base de la deuxième caractéristique d'image comprend:

> convertir (903) la caractéristique d'arbre en un nombre décimal;
> entrer (904) le nombre décimal dans une fonction cible; et
> identifier (905) le type de code de l'image dans la sous-zone cible sur la base d'un résultat de sortie de la fonction cible.

2. Terminal (1000), comprenant:

(i) un premier module d'obtention (1001) configuré pour obtenir une première caractéristique d'image d'une image cible, dans lequel la première caractéristique d'image est une valeur d'échelle de gris;

(ii) un premier module de détermination (1002) configuré pour déterminer une zone cible de l'image cible sur la base de la première caractéristique d'image, dans lequel le premier module de détermination (1002) est en outre configuré pour:

> déterminer une première valeur absolue correspondant à chaque pixel dans l'image cible, dans lequel la première valeur absolue est une valeur absolue d'une différence entre une valeur de gradient d'une valeur d'échelle de gris du pixel dans une direction horizontale et une valeur de gradient d'une valeur d'échelle de gris du pixel dans une direction verticale,
>
> comparer la première valeur absolue correspondant à chaque pixel, à une première valeur de seuil prédéfinie; et
>
> déterminer en tant que zone cible une zone comprenant tous les pixels dont les premières valeurs absolues sont supérieures à la première valeur de seuil prédéfinie;

(iii) un deuxième module de détermination (1003) configuré pour diviser la zone cible en une pluralité de sous-zones, et filtrer les sous-zones pour déterminer une sous-zone cible de l'image cible, dans lequel le deuxième module de détermination (1003) est en outre configuré pour:

> déterminer un premier pixel dans une image dans chaque sous-zone, et des pixels voisins qui sont adjacents au premier pixel;
>
> déterminer une première relation de comparaison entre une valeur d'échelle de gris du premier pixel et une valeur d'échelle de gris de chacun des pixels voisins;
>
> déterminer un code LBP de motifs binaires locaux de chaque pixel voisin du premier pixel sur la base de la première relation de comparaison de valeurs d'échelle de gris;
>
> déterminer le nombre de commutations binaires dans les codes LBP de motifs binaires locaux des pixels voisins du premier pixel, dans lequel le nombre de commutations binaires dans les codes LBP est le nombre de fois que l'on passe de 1 à 0 ou de 0 à 1;
>
> obtenir une somme de nombres de commutations binaires dans les codes LBP pour tous les pixels dans l'image dans chaque sous-zone; et
>
> déterminer en tant que sous-zone cible une sous-zone dont la somme des nombres de commutations binaires dans les codes LBP est supérieure à une troisième valeur de seuil prédéfinie;

(iv) un deuxième module d'obtention (1004) configuré pour obtenir une deuxième caractéristique d'image d'une image dans la sous-zone cible; et

(v) un module d'identification (1005) configuré pour identifier un type de code de l'image dans la sous-zone cible sur la base de la deuxième caractéristique d'image, dans lequel le type de code comprend au moins l'un parmi un code unidimensionnel, un code bidimensionnel et un type non code,

dans lequel la deuxième caractéristique d'image est une caractéristique de fougère;
dans lequel le deuxième module d'obtention (1004) est en outre configuré pour: obtenir une deuxième relation de comparaison de valeurs d'échelle de gris entre des valeurs d'échelle de gris de deux pixels quelconques dans l'image dans la sous-zone cible; et déterminer une caractéristique de fougère de l'image dans la sous-zone cible sur la base de la deuxième relation de comparaison de valeurs d'échelle de gris, dans lequel la caractéristique de fougère est représentée par un bit binaire; et
dans lequel le module d'identification (1005) est en outre configuré pour: convertir la caractéristique de fougère en un nombre décimal; entrer le nombre décimal dans une fonction cible; et identifier le type de code de l'image dans la sous-zone cible sur la base d'un résultat de sortie de la fonction cible,
ou
dans lequel la deuxième caractéristique d'image est une caractéristique d'arbre;
dans lequel le deuxième module d'obtention (1004) est en outre configuré pour: obtenir une troisième relation de comparaison de valeurs d'échelle de gris entre des valeurs d'échelle de gris de deux pixels correspondant à chaque nœud d'arbre dans l'image dans la sous-zone cible; et déterminer une caractéristique d'arbre de l'image dans la sous-zone cible sur la base de la troisième relation de comparaison de valeurs d'échelle de gris, dans lequel la caractéristique d'arbre est représentée par un bit binaire; et
dans lequel le module d'identification (1005) est en outre configuré pour: convertir la caractéristique d'arbre en un nombre décimal; entrer le nombre décimal dans une fonction cible; et identifier le type de code de l'image dans la sous-zone cible sur la base d'un résultat de sortie de la fonction cible.

3. Support de stockage non volatile stockant des instructions de programme, dans lequel les instructions de programme, lorsqu'elles sont exécutées par un processeur, amènent le processeur à mettre en œuvre le procédé d'identification d'image selon la revendication 1.

100

Server

110 — RF circuit

140

120

130 — Processor

Power supply

Memory

FIG. 1

Obtain a first image feature of a target image ⎯ 201

Determine a target area of the target image based on the first image feature ⎯ 202

Divide the target area into multiple sub-areas, and filter the sub-areas to determine a target sub-area of the target image ⎯ 203

Obtain a second image feature of an image in the target sub-area ⎯ 204

Identify a code type of the image in the target sub-area based on the second image feature. The code type includes at least one of a one-dimensional code, a two-dimensional code and a non-code type ⎯ 205

FIG. 2

Determine a first absolute value corresponding to each pixel in the target image. The first absolute value is an absolute value of a difference between a gradient value of a grayscale value of the pixel in a horizontal direction and a gradient value of a grayscale value of the pixel in a vertical direction — 301

Compare the first absolute value corresponding to each pixel with a first preset threshold — 302

Determine an area including all pixels whose first absolute values are greater than the first preset threshold, as the target area — 303

**FIG. 3**

Determine a second absolute value corresponding to any two pixels in the target image. The second absolute value is an absolute value of a difference between grayscale values of the any two pixels — 401

Compare the second absolute value with a second preset threshold — 402

Determine an area including all pixels whose second absolute values are less than the second preset threshold, as the target area — 403

**FIG. 4**

Determine a first pixel in an image in each sub-area, and adjacent pixels adjacent to the first pixel — 501

Determine a first grayscale value comparison relationship between a grayscale value of the first pixel and a grayscale value of each of the adjacent pixels — 502

Determine a local binary patterns LBP code of each adjacent pixel of the first pixel based on the first grayscale value comparison relationship — 503

Determine the number of binary switching in the local binary patterns LBP codes of the adjacent pixels of the first pixel. The number of binary switching in the LBP codes is the number of times of changing from 1 to 0 or changing from 0 to 1 — 504

Obtain a sum of numbers of binary switching in the LBP codes for all pixels in the image in each sub-area — 505

Determine a sub-area whose sum of the numbers of binary switching in the LBP codes is greater than a third preset threshold, as the target sub-area — 506

**FIG. 5**

| 44 | 118 | 61 |
|----|-----|----|
| 192 | 83 | 32 |
| 250 | 204 | 174 |

| 1 | 0 | 1 |
|---|---|---|
| 0 |   | 1 |
| 0 | 0 | 0 |

**FIG. 6a**

**FIG. 6b**

**FIG. 6c**

| $Z_1$ | $Z_2$ | $Z_3$ |
|---|---|---|
| $Z_4$ |  | $Z_6$ |
| $Z_7$ | $Z_8$ | $Z_9$ |

**FIG. 6d**

**FIG. 6e**

**FIG. 6f**

Determine a first absolute sum value of each pixel in an image in each sub-area. The first absolute sum value is a sum of an absolute value of a grayscale value of the pixel in a horizontal direction and an absolute value of a grayscale value of the pixel in a vertical direction ⟋— 701

↓

Obtain a sum of first absolute sum values of all pixels in the image in each sub-area ⟋— 702

↓

Determine a sub-area whose sum of the first absolute sum values is greater than a fourth preset threshold, as the target sub-area ⟋— 703

**FIG. 7**

Obtain a second grayscale value comparison relationship between grayscale values of any two pixels in the image in the target sub-area ⟋— 801

↓

Determine a Fern feature of the image in the target sub-area based on the second grayscale value comparison relationship. The Fern feature is represented by a binary bit ⟋— 802

↓

Convert the Fern feature into a decimal number ⟋— 803

↓

Input the decimal number into a target function ⟋— 804

↓

Identify the code type of the image in the target sub-area based on an output result of the target function ⟋— 805

**FIG. 8**

Obtain a third grayscale value comparison relationship between grayscale values of two pixels corresponding to each tree node in the image in the target sub-area

901

Determine a Tree feature of the image in the target sub-area based on the third grayscale value comparison relationship. The Tree feature is represented by a binary bit

902

Convert the Tree feature into a decimal number

903

Input the decimal number into a target function

904

Identify the code type of the image in the target sub-area based on an output result of the target function

905

**FIG. 9**

1000

Terminal

First obtaining module

1001

First determining module

1002

Second obtaining module

1004

Second determining module

1003

Identification module

1005

**FIG. 10**

**EP 3 493 101 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130193211 A1
- US 20120070086 A1
- US 20010025886 A1